# EUROPÄISCHE PATENTSCHRIFT

(11) **EP 2 186 244 B1**
(45) Veröffentlichungstag und Bekanntmachung des Hinweises auf die Patenterteilung: **12.02.2014**
(21) Anmeldenummer: 09732193.9
(22) Anmeldetag: 20.03.2009
(51) Int. Cl.: H04L 1/00, H04L 1/24

(54) **VERFAHREN ZUM TESTEN VON ÜBERTRAGUNGSZUSTÄNDEN EINES GERÄTS ZUR DRAHTLOSEN KOMMUNIKATION**
METHOD FOR TESTING TRANSMISSION MODES OF A WIRELESS COMMUNICATION DEVICE
PROCÉDÉ POUR TESTER LES MODES DE TRANSMISSION D'UN APPAREIL DE COMMUNICATION SANS FIL

(30) Priorität: 15.04.2008 DE 102008018807; 08.08.2008 DE 102008037132
(43) Veröffentlichungstag der Anmeldung: 19.05.2010
(73) Patentinhaber: Rohde & Schwarz GmbH & Co. KG, 81671 München (DE)
(72) Erfinder: PAULY, Andreas, 80799 München (DE); SCHLIENZ, Jürgen, 85586 Poing (DE)
(74) Vertreter: Beder, Jens
(86) Internationale Anmeldenummer: PCT/EP2009/002080
(87) Internationale Veröffentlichungsnummer: WO 2009/127310

(56) Entgegenhaltungen:
- WO-A-02/082670
- DE-A1- 10 025 838

## Beschreibung

Die Erfindung betrifft ein Verfahren zum Testen der Übertragungszustände eines Geräts zur drahtlosen Kommunikation in einem Funknetzwerk.

Digitale Mobilfunkgeräte, aber auch andere Geräte zur drahtlosen Kommunikation, werden immer komplexer und verfügen über immer mehr an die Übertragungsqualität anpassbare Übertragungsparameter, die, alleine durch deren sinnvolle Kombinationen, eine Vielzahl an Übertragungszuständen erlauben. Beispiele solcher Übertragungsparameter des Übertragungssignals sind Leistung, Modulationsart, verschiedene Arten des Multiplexing, die Verwendung verschiedener Antennen in Multiple Input Multiple Output (MIMO) Systemen, usw. Die Übertragungsqualität beschreibt dabei die Qualität der physikalischen Übertragung auf der Funkstrecke. Der einzustellende Übertragungszustand wird mittels vom Mobilfunkgerät übertragener Entscheidungsinformation/en, z.B. einer gemessenen Übertragungsqualität, ausgewählt. Neue Übertragungsstandards erlauben es einem Mobiltelefon eine Empfehlung für einen einzustellenden Übertragungszustand an die Basisstation zu senden, die diese Empfehlung entsprechend deren Auslastung annehmen oder ablehnen kann.

Die Druckschrift WO 02/082670 A zeigt ein System für den Test von mobilen Endgeräten eines zellularen Funkkommunikationsnetzes. Das System umfasst Komponenten zur Simulation einer Vielzahl von Basisstationen und Schnittstellenkomponenten zur Übertragung der entsprechend erzeugten Signale der simulierten Vielzahl von Basisstationen an ein oder mehrere mobile Endgeräte.

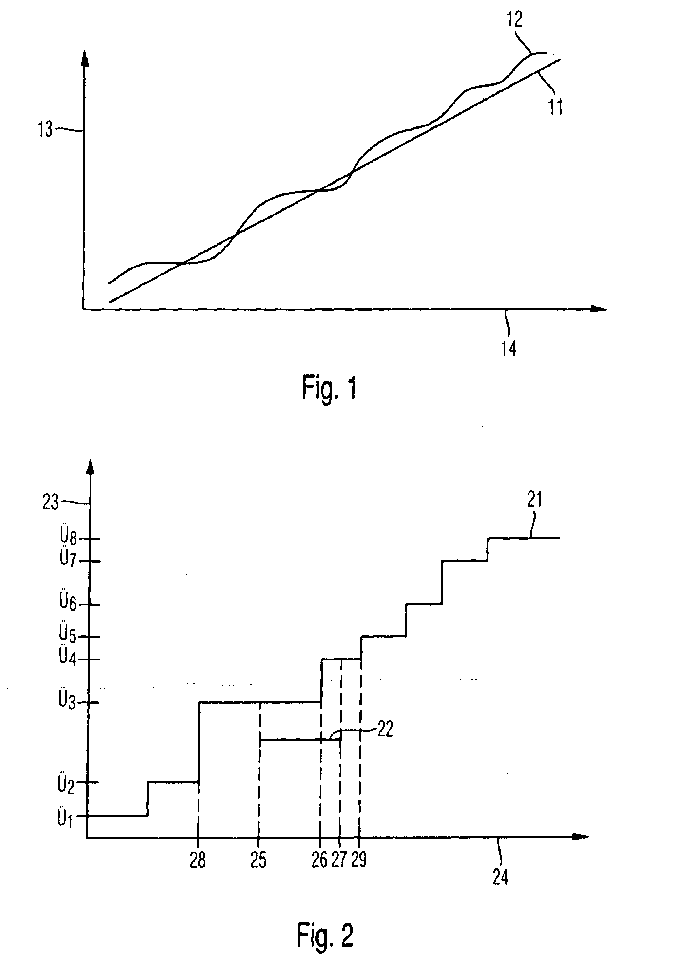

Für die Entwicklung von Geräten, die in allen Betriebssituationen den richtigen Übertragungszustand einstellen bzw. empfehlen, ist eine Untersuchung der Umschaltvorgänge zwischen zwei Übertragungszuständen sehr hilfreich. Klassische Testverfahren testen allerdings nur die Übertragungsrate in Abhängigkeit der Übertragungsqualität, indem die Übertragungsrate bei ständig verbesserter Übertragungsqualität gemessen wird, wie es in Fig. 1 gezeigt ist. Die Testverfahren des Stands der Technik zeichnen sich durch verschieden Funktionen der Übertragungsqualität über die Zeit aus, um Schwankungen in der Kanalgüte zu simulieren wie sie in der Wirklichkeit auftreten. So werden z.B. Fading-Oszillationen in der deutschen Patentschrift DE 100 25 838 B4 mit einer Monte Carlo Methode simuliert.

Aus solchen klassischen Tests kann der Entwickler keine Erkenntnisse über die Umschaltvorgänge also die Entscheidung bezüglich des Übertragungszustands des zu testenden Mobilfunkgeräts gewinnen.

Die Umschaltpunkte sind nicht nur nicht bekannt, sondern sind auch nicht eindeutig definiert. Die Entscheidung des Umschaltens zwischen zwei Übertragungszuständen beinhaltet einen Hystereseeffekt, um zu verhindern, dass auf dem Umschaltpunkt und in dessen Nähe der Übertragungszustand ständig wechselt.

Zusätzlich gibt es noch keine Testverfahren, die Mobilfunkgeräte moderner Übertragungsstandards, die Empfehlungen eines Übertragungszustands an die Basisstation geben, testen. Dabei ist eine Untersuchung der Umschaltpunkte zwischen Vorschlägen verschiedener Übertragungszuständen von besonderem Interesse für die Entwicklung dieser neuen Generation der Mobilfunkgeräte.

Ähnliche Problematiken treten beim Testen von Basisstationen auf, die den einzustellenden Übertragungszustand auf der Basis von Rückgabewerten des Mobilfunkgeräts entscheiden und so Umschaltvorgänge verursachen. Klassische Rückgabewerte spezifizieren dabei die Übertragungsqualität, während in neueren Übertragungsstandards wie z.B. WiMAX (Worldwide Interoperability for Microwave Access) auch Empfehlungen eines einzustellenden Übertragungszustands als Rückgabewerte an die Basisstation gesendet werden. Als Rückgabewerte werden in dieser Anmeldung die Entscheidungsinformationen bezeichnet, die ein Mobilfunkgerät an eine Basisstation sendet und die relevant für die Entscheidung der Basisstation für einen darauffolgend einzustellenden Übertragungszustand ist.

Die Aufgabe der Erfindung ist es die oben beschriebenen Probleme des Stands der Technik zu lösen und ein verbessertes Testverfahren zu schaffen.

Das erfindungsgemäße Verfahren legt zuerst in einem Testgerät einen Umschaltbereich in einem Parameterraum fest. Der oder die Parameter des Parameterraums beschreibt / beschreiben die Qualität der Übertragung und beeinflusst / beeinflussen eine Empfehlung eines einzustellenden Übertragungszustands in einem zu testenden Gerät. Der Umschaltbereich ist ein Unterraum dieses Parameterraums, der mindestens eine Umschaltgrenze für die Empfehlung des darauffolgend einzustellenden Übertragungszustands enthält. In einem weiteren Schritt des Verfahrens werden zufällige Parameterpunkte aus dem Umschaltbereich entsprechend einer auf dem Umschaltbereich definierten Wahrscheinlichkeitsverteilung erzeugt. Für jeden Parameterpunkt wird ein Signal erzeugt, das eine durch den Parameterpunkt bestimmte Übertragungsqualität aufweist und an das zu testende Gerät übertragen wird. Das zu testende Gerät sendet daraufhin ein Antwortsignal pro empfangenem Signal an das Testgerät, wobei das Antwortsignal eine Empfehlung eines darauffolgend einzustellenden Übertregungszustands beinhaltet. In dem Testgerät werden nun die Empfehlungen aus den empfangenen Antwortsignalen ausgewertet.

Eine alternative Anwendung des erfindungsgemäßen Testverfahrens legt zuerst in einem Testgerät einen Umschaltbereich in einem Parameterraum fest. Die Parameter des Parameterraums beschreiben die Qualität der Übertragung und beeinflussen einen einzustellenden Übertragungszustand in einem zu testenden Gerät. Der Umschaltbereich ist ein Unterraum dieses Parameterraums, der mindestens eine Umschaltgrenze für den einzustellenden Übertragungszustand enthält. In einem weiteren Schritt des Verfahrens werden zufällige Parameterpunkte aus dem Umschaltbereich entsprechend einer auf dem Umschaltbereich definierten Wahrscheinlichkeitsverteilung erzeugt. Jeder Parameterpunkt wird in je einem Signal an das zu testende Gerät gesendet. Das zu testende Gerät sendet daraufhin ein Antwortsignal pro empfangenem Signal an das Testgerät, wobei das Antwortsignal einen einzustellenden Übertragungszustand beinhaltet. In dem Testgerät werden nun die einzustellenden Übertragungszustände aus den empfangenen Antwortsignalen ausgewertet.

Die Unteransprüche betreffen vorteilhafte Weiterbildungen der Erfindung.

Es ist unter anderem vorteilhaft mehrere Umschaltbereiche festzulegen und jeweils entsprechend einem der beiden Testverfahren zu analysieren.

Weiterhin ist es vorteilhaft, für die auf einem Umschaltbereich definierte Wahrscheinlichkeitsverteilung eine Gaußverteilung zu nehmen, wenn der Parameterraum eindimensional ist und im Falle eines mehrdimensionalen Parameterraums eine Verteilung zu wählen, die in zu der Umschaltgrenze orthogonaler Richtung gaußverteilt ist und in den restlichen transienten Richtungen gleichverteilt ist.

Es ist zusätzlich vorteilhaft, die durch das Antwortsignal übertragenen einzustellenden Übertragungszustände bzw. deren Empfehlungen statistisch auszuwerten. Dabei bestimmt die Anzahl der erzeugten Parameterpunkte die Auflösung der statistischen Auswertung.

Besonders vorteilhaft ist es, die Umschaltbereiche so groß festzulegen, dass sich Hystereseeffekte und Richtungsabhängigkeiten bei mehreren Parametern des Umschaltvorgangs zwischen zwei Übertragungszuständen bei der statistischen Auswertung herausmitteln.

Das beschriebene Verfahren zum Testen von Empfehlungen einzustellender Übertragungszustände ist besonders für Mobilfunkgeräte geeignet. Insbesondere für solche Mobilfunkgeräte, welche den Übertragungsstandard des WiMAX Forums verwenden und eine Empfehlung zur Einstellung von Space Time Coding oder Spatial Multiplexing an die Basisstation senden.

Das Verfahren zum Testen von Empfehlungen einzustellender Übertragungszustände kann noch verbessert werden, indem der Parameterraum zusätzlich zu der Qualität der Übertragung einen Übertragungszustand beschreibt und die einzelnen Signale an die einzelnen Signale an das zu testende Gerät in dem Übertragungszustand übertragen werden, der durch den entsprechenden zufällig erzeugten Parameterpunkt definiert wurde. Dies ist vor allem dann sinnvoll, wenn das zu testende Gerät den aktuell eingestellten Übertragungszustand bei der Auswahl einer Empfehlung eines daraufhin einzustellenden Übertragungszustands berücksichtigt.

Bei der alternativen Anwendung des Verfahrens zum Testen von einzustellenden Übertragungszuständen ist es von Vorteil, wenn der Parameterraum zusätzlich zu der Qualität der Übertragung eine Empfehlung eines Übertragungszustands enthält.

Die Erfindung dieser Anmeldung wird anhand von Mobilfunkgerät und Basisstation als Beispiele für Geräte zur drahtlosen Kommunikation in Funknetzen beschrieben. Die Anmeldung ist aber nicht auf das Testen von Geräten des Mobilfunks limitiert, sondern ist zum Testen aller Geräte zur drahtlosen Kommunikation geeignet, die in verschiedenen Übertragungszuständen senden und empfangen können und Teil eines Funknetzes mit mindestens einem zentralen Gerät und mindestens einem dezentralen Gerät bilden. Das zentrale Gerät, im Mobilfunk die Basisstation, besitzt die Entscheidungsbefugnis bezüglich des einzustellenden Übertragungszustands. Das dezentrale Gerät, im Mobilfunk das Mobilfunkgerät, beeinflusst den einzustellenden Übertragungszustand nur durch die an das zentrale Gerät gesendeten Rückgabewerte.

Zwei mögliche Ausführungsbeispiele werden nachfolgend anhand der Zeichnung ausführlich beschrieben. In der Zeichnung zeigt:
- Fig. 1: den Stand der Technik zum indirekten Testen der Umschaltvorgänge durch Messen der Datenrate in Abhängigkeit der Übertragungsqualität;
- Fig. 2: einen erfindungsgemäßen Umschaltbereich in den diskreten Übertragungszuständen in Abhängigkeit der Übertragungsqualität;
- Fig. 3: das Schaltdiagramm eines möglichen Ausführungsbeispiel eines Testgeräts, welches das erfindungsgemäßeverfahren anwendet;
- Fig. 4A: den ersten Teil eines Diagramms der Verfahrensschritte eines erfindungsgemäßen Ausführungsbeispiels;
- Fig. 4B: den zweiten Teil eines Diagramms der Verfahrensschritte eines erfindungsgemäßen Ausführungsbeispiels;
- Fig. 5: eine mögliche statistische Auswertung einer Umschaltgrenze;
- Fig. 6: ein Schaltdiagramm eines alternativen Ausführungsbeispiels eines Testgeräts, welches das erfindungsgemäßeVerfahren anwendet;
- Fig. 7A: den ersten Teil eines Diagramms der Verfahrensschritte eines alternativen erfindungsgemäßen Ausführungsbeispiels; und
- Fig. 7B: den zweiten Teil eines Diagramms der Verfahrensschritte eines alternativen erfindungsgemäßen Ausführungsbeispiels;

Fig. 1 zeigt Testverfahren des Stands der Technik im Mobilfunk, welches die Umschaltvorgänge nur indirekt über die Datenrate misst. Die Datenrate wird auf der y-Achse 13 in Abhängigkeit der Übertragungsqualität auf der x-Achse 14 aufgetragen. Das Testverfahren misst die Datenrate 12 eines Mobilfunkgeräts bei steigender Signalqualität. Die gemessene Datenrate 12 sollte bei gut funktionierenden Übertragungszustandsanpassungen über einer vorgegebenen Datenrate 11 pro Übertragungsqualität liegen. Allerdings geben solche Testverfahren keine Informationen über die einzelnen Umschaltvorgänge, wie z.B., bei welcher Übertragungsqualität diese stattfinden.

Das Diagramm in Fig. 2 zeigt Übertragungszustände Ü₁-Ü₈ auf der y-Achse 23 und die Übertragungsqualität auf der x-Achse 24. Die Übertragungszustände Ü₁-Ü₈, die von der Basisstation auf der Basis von Rückgabewerten eines Mobilfunkgeräts ausgewählt werden, können sowohl diskrete als auch kontinuierliche Übertragungsparameter enthalten. Beispiele diskreter Übertragungsparameter sind die verwendeten Modulationsarten, wie Quadraturphasenumtastung (QPSK - Quadratic Phase Shift Keying) oder Quadraturamplitudenmodulation (QAM - Quadratic Amplitude Modulation), die verwendete Codierung, wie Space Time Coding (STC) oder Spatial Multiplexing (SM), oder die Verwendung verschiedener Frequenzen bei orthogonalem Frequenzmultiplexing (OFDM - Orthogonal Frequency Division Multiplexing). Die Leistung des Übertragungssignals ist ein kontinuierlicher Übertragungsparameter, der in der technischen Realisierung aber auch in diskreten Schritten verändert wird. Die Liste der möglichen und sinnvollen Kombinationen von verschiedenen Übertragungsparametern wird in einem sogenannten Code Book gespeichert, das alle durch den Übertragungsstandard erlaubten Übertragungszustände, z.B. Ü₁-Ü₈, als sogenannte Code Book Einträge auflistet.

Die Übertragungsqualität ist hier eindimensional und kann z.B. durch eine der folgenden Größen beschrieben werden: ein Signal zu Rausch Verhältnis (SNR - Signal to Noise Ratio), ein Signal to Noise plus Interference Ratio (SNIR), ein Channel Quality Identifier (CQI), ein Block Error Rate (BLER) oder ein Packet Error Rate (PER). Eine höher dimensionale Übertragungsqualität kann zusätzlich Interferenzen, verschiedene Power Delay Profiles (PDP) und / oder andere Informationen zur physikalischen Qualität des Übertragungssignals beinhalten.

In Fig. 2 werden die Code Book Einträge als Übertragungszustände 21 aufgetragen, die in Abhängigkeit der Übertragungsqualität von der Basisstation vorgegeben werden. Ein Umschaltpunkt 26 zwischen zwei Code Book Einträgen wird hier exemplarisch gezeigt für einen Übergang zwischen den Übertragungszuständen Ü₃ und Ü₄. Wird die Übertragungsqualität durch die Rückgabewerte des Mobiltelefons nur eindimensional, z.B. durch ein SNR, gemessen, so handelt es sich bei Punkt 26 um einen Umschaltpunkt. Findet die Entscheidung zwischen zwei Code Book Einträgen in der Basisstation aufgrund von n Rückgabewerten statt, so handelt es sich um eine Umschaltgrenze die in dem n-dimensionalen Raum der Rückgabewerte, eine n-1 dimensionale Hyperebene bildet. Durch diese Umschaltgrenze wird jede Kombination aus Rückgabewerten in jeder Situation eindeutig einer der beiden Code Book Einträge zugeordnet, die durch die Umschaltgrenze getrennt werden. Im Folgenden werden die Begriffe Umschaltpunkt und Umschaltgrenze je nach Situation verwendet. Der Begriff des Umschaltpunktes limitiert die Erfindung allerdings nicht auf nur einen Rückgabewert.

Ein Umschaltpunkt 26 zwischen zwei Code Book Einträgen ist aber nicht immer eindeutig definiert. So verhindert z.B. die Basisstation durch eine Hysterese ein ständiges Hin- und Herschalten zwischen den zwei benachbarten Code Book Einträgen Ü₃ und Ü₄, wenn die Übertragungsqualität genau dem Umschaltpunkt 26 entspricht oder um diesen fluktuiert. Zwei benachbarte Code Book Einträge sind dabei diejenigen Übertragungszustände, denen jeweils durch Entscheidungsregeln der Basisstation Intervalle in der Übertragungsqualität zugeordnet werden, die wiederum aneinander angrenzen. Durch solche Hystereseeffekte wird z.B. bei einer Verringerung der Übertragungsqualität der nächst stabilere Code Book Eintrag erst dann gewählt, wenn eine zweite Schwelle in der Übertragungsqualität unterschritten wird, die geringer ist als die Übertragungsqualität am Umschaltpunkt 26. In entgegengesetzter Richtung gilt Entsprechendes für eine Verbesserung der Übertragungsqualität.

Um nun die Entscheidungsprozesse an einem Umschaltpunkt 26 oder in dessen Nähe zu untersuchen, wird ein sog. Monte Carlo Ansatz verwendet. Anstatt ein deterministisch festgelegtes Testverfahren zu verwenden, wird ein Umschaltbereich 22 als Intervall in der Übertragungsqualität um einen Umschaltpunkt 26 festgelegt. Die Intervallgrenzen sind in der Fig. 2 mit 25 und 27 bezeichnet und können vorzugsweise symmetrisch bezüglich des Umschaltpunkts 26 liegen. Durch das zufällige Auswählen von Punkten in diesem Umschaltbereich 22, d.h. von Übertragungsqualitäten, und durch das aufeinanderfolgende Senden von Signalen mit den zufällig erzeugten Übertragungsqualitäten als Rückgabewerte eines Mobilfunkgeräts an eine Basisstation, lässt sich nun durch Mittelung der Entscheidungen der Basisstation, die wiederum an ein Testgerät zurückgeschickt werden, eine statistische Aussage über den Umschaltpunkt 26 treffen.

Neuartige Übertragungsstandards erlauben es Mobilfunkgeräten, der Basisstation einen einzustellenden Übertragungszustand zu empfehlen. Das WiMAX Forum hat einen Standard definiert, in dem das Mobiltelefon der Basisstation die Verwendung von Space Time Coding (STC) oder alternativ von Spatial Multiplexing (SM) empfiehlt. Das Mobilfunkgerät verfügt also auch über eine Entscheidungsroutine, die derselben Problematik wie die der Basisstation unterliegt und bei der Entwicklung von Mobiltelefonen getestet werden sollte. Das oben beschriebene Verfahren zum Testen der Umschaltpunkte in der Basisstation kann dementsprechend auch zum Testen des Umschaltpunktes zwischen STC und SM im Mobiltelefon bei WiMAX verwendet werden.

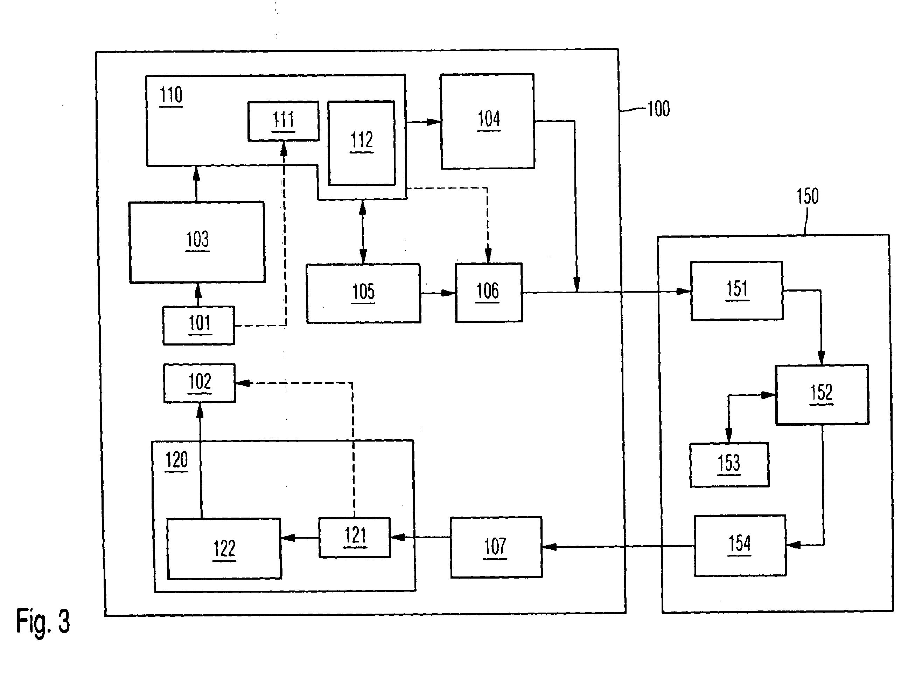

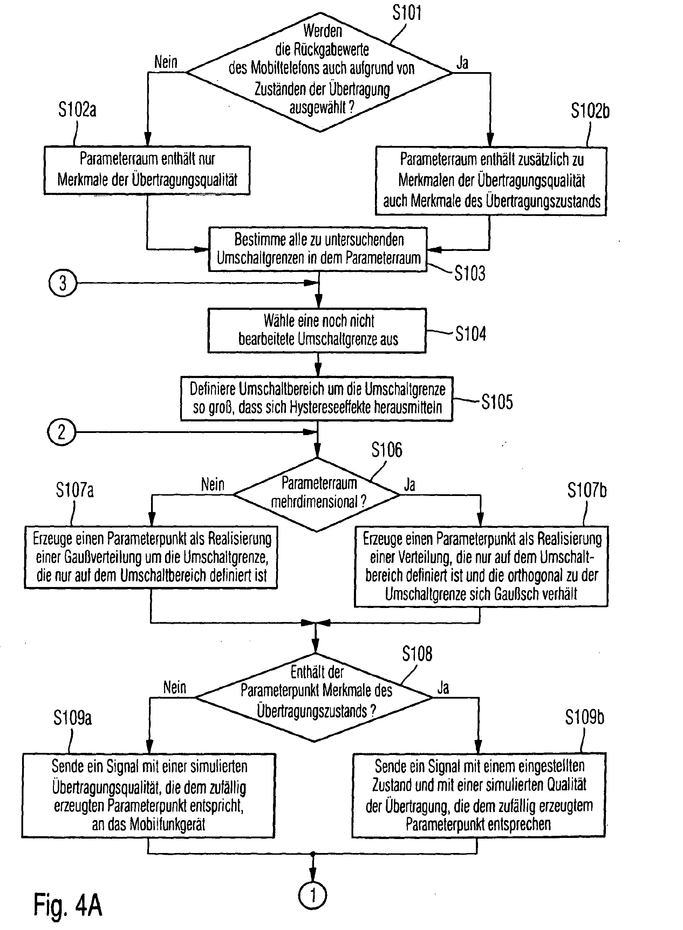

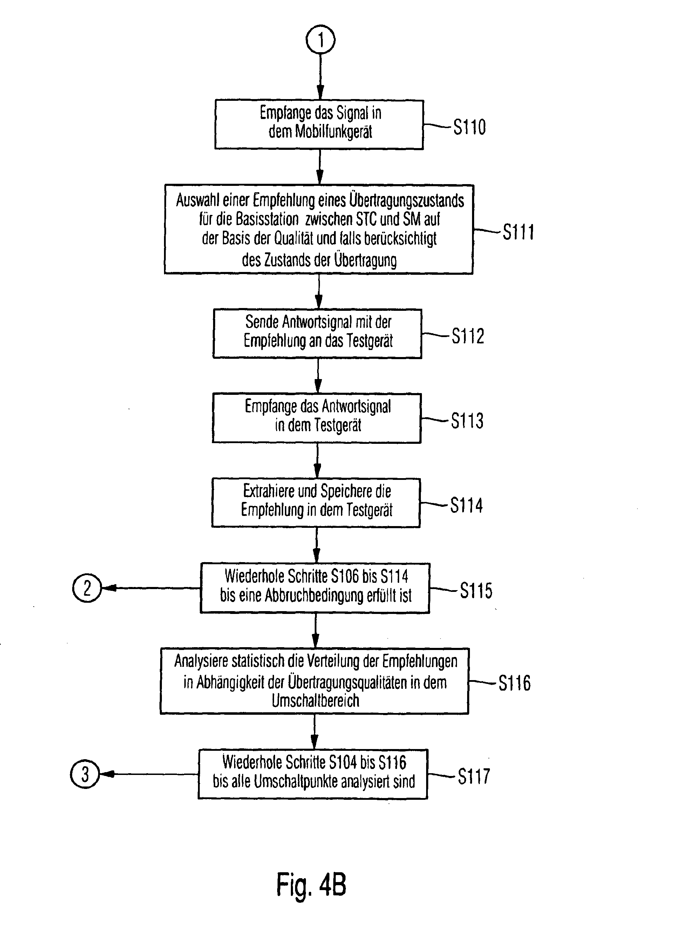

Fig. 3 zeigt ein Blockschaltbild eines Testgeräts 100 zum Testen eines Mobilfunkgeräts des Übertragungsstandards des WiMAX Forums, das das erfindungsgemäße Verfahren anwendet. Fig. 4 zeigt die einzelnen Schritte des erfindungsgemäßen Verfahrens. Das Verfahren wird anhand von Fig. 3 und 4 beschrieben.

Der Benutzer des Testgeräts 100 kann das Gerät durch eine Eingabevorrichtung 101, z.B. eine Maus, eine Tastatur, einen Touchscreen oder eine einfache Schnittstelle und eine Ausgabevorrichtung 102, z.B. einen Monitor, ein Anzeigefeld oder eine Schnittstelle kontrollieren. Der Benutzer kann in Schritt S101 festlegen, welche Parameter in diesem Testverfahren als Grundlage dienen und statistisch variiert werden. Basiert die Entscheidung des Mobilfunkgeräts zwischen STM und SM nur auf einem oder mehreren Merkmalen der Übertragungsqualität, z.B. dem SNR, so wird in Schritt S102a ein Parameterraum definiert, der dieses Merkmal oder diese Merkmale beschreibt. Berücksichtigt das Mobilfunkgerät für seine Entscheidung allerdings weitere Merkmale z.B. des Übertragungszustandes, so können diese in dem Schritt S102b in den Parameterraum mit aufgenommen werden. Dies kann durch den Benutzer vor jedem Test durch die Eingabevorrichtung 101 eingegeben werden.

Der Benutzer kann durch die Eingabevorrichtung in Schritt S103 zusätzlich bestimmte Testszenarien definieren oder aus vordefinierten Testszenarien auswählen, die die zu untersuchenden Umschaltgrenzen bestimmen. Ein mögliches Testszenario wäre das Untersuchen genau eines Umschaltpunkts. Dabei kann der Benutzer eine ihn interessierende Umschaltgrenze, z.B. 26, auswählen. Die bis jetzt vom Benutzer gemachten Einstellungen können natürlich auch automatisch erfolgen. So können kleine Vortests mit niedriger Auflösung, die ungefähre Lage der Umschaltgrenzen herausfinden oder auf welcher Entscheidungsgrundlage das Mobiltelefon arbeitet. Die Entscheidung, welche Umschaltgrenze zu analysieren ist, kann zufällig ausgewählt werden oder es werden alle Umschaltgrenzen z.B. durch sequentielles Untersuchen der einzelnen Grenzen untersucht.

Das Testverfahren wählt in Schritt S104 eine der noch nicht analysierten, aber zu untersuchenden Umschaltgrenzen aus. In dem hier gewählten Testszenario ist das die eine zu untersuchende Umschaltgrenze 26.

Die Information des ausgewählten und zu untersuchenden Umschaltpunkts 26 und des ausgewählten Parameterraums wird von der Eingabevorrichtung 101 an die Definitionsvorrichtung 103 geleitet. Die Definitionsvorrichtung 103 legt einen Umschaltbereich 22 in Schritt S105 fest, der den zu untersuchenden Umschaltpunkt 26 enthält. Das Intervall in der Übertragungsqualität als Umschaltbereich 22 im Falle eines eindimensionalen Parameterraums kann von dem Benutzer durch die Eingabevorrichtung 101 festgelegt werden oder eventuell automatisch definiert werden, z.B. als Intervall, welches von der Übertragungsqualität 25 beginnt, die in der Mitte 25 zwischen dem Umschaltpunkt 28 zum nächst stabileren Übertragungszustand Ü₂ und dem zu untersuchenden Umschaltpunkt 26 liegt, und bei der Übertragungsqualität 27 endet, die in der Mitte 27 zwischen dem Umschaltpunkt 29, der zu einem Übertragungszustand Ü₅ mit der nächst höheren Datenrate umschaltet, und dem zu untersuchenden Umschaltpunkt 26 liegt. Der Umschaltbereich 22 sollte so groß gewählt sein, dass sich Hystereseeffekte in den Umschaltpunkt 26 in der späteren Auswertung herausmitteln.

Ist der Parameterraum mehrdimensional, zum Beispiel n-dimensional, so ist auch der Umschaltbereich ein n-dimensionaler Unterraum des Parameterraums. Dementsprechend enthält der Umschaltbereich keinen Umschaltpunkt, sondern eine n-1 dimensionale Umschaltgrenze. Ein zweidimensionaler Parameterraum enthält also eine Grenzline, ein dreidimensionaler Parameterraum eine Grenzfläche, usw..

Die Informationen des festgelegten Umschaltbereichs 22 im Parameterraum werden an den Parametergenerator 110 gegeben. Dieser beinhaltet einen Speicher 111 der eine oder mehrere Vorschriften zur Definition einer Wahrscheinlichkeitsverteilung auf einem Umschaltbereich, z.B. 22, enthält. Diese Vorschrift könnte im eindimensionalen Parameterraum (S106) eine Gaußverteilung mit dem Umschaltpunkt, hier 26, als Mittelwert und einer festen Varianz vorsehen, wie es in Schritt S107a des Testverfahrens gemacht wird. Die Varianz kann natürlich auch relativ zu der Größe des Umschaltbereichs oder durch den Benutzer mittels der Eingabevorrichtung 101 festgelegt werden. Im Falle eines n-dimensionalen Parameterraums (S106) wäre es zum Beispiel sinnvoll, die Verteilung so zu definieren, dass die Wahrscheinlichkeit in der Nähe und auf der Umschaltgrenze maximal ist und sich immer weiter verringert, umso weiter man sich von der Umschaltgrenze entfernt, wie es im Schritt S107b vorgesehen ist. Dies ist vor allem in Hinblick der Problematik, einen höherdimensionalen Raum mit Punkten zu füllen, sinnvoll, da der analysierte Bereich innerhalb des Umschaltbereichs auf die nächste Umgebung der Umschaltgrenze beschränkt wird. Dies könnte durch eine bevorzugte Verteilung gelöst werden, die sich in zu der Umschaltgrenze orthogonaler Richtung Gaußsch verhält und in den restlichen transienten Richtungen gleichverteilt ist. Nach diesen Vorschriften oder auch nach einer Vorgabe von dem Benutzer wird nun eine Wahrscheinlichkeitsdichte auf dem Umschaltbereich 22 definiert. Je nach Untersuchungsziel können natürlich auch andere Verteilung, wie Cauchyverteilung, Gleichverteilung oder eine Verteilung auf einem diskreten Parameterraum, z.B. eine Binomialverteilung, verwendet werden. Ein Pseudo-Zufallszahlengenerator 112 erzeugt nun basierend auf der definierten Wahrscheinlichkeitsdichte in dem Umschaltbereich 22 eine Realisierung eines Parameterpunktes. Die Realisierung liefert in Schritt S107a oder S107b einen zufälligen Parameterpunkt im Umschaltbereich, was im einfachsten Falle eine Übertragungsqualität im Umschaltbereich 22 ist oder auch noch den Übertragungszustand, hier Ü₃ oder Ü₄, umfassen kann.

Nach der Erzeugung des Parameterpunktes werden in dem Datenerzeuger 105 Daten entsprechend dem verwendeten Übertragungsstandard und Übertragungszustand erzeugt. Das Signal kann zufällig erzeugte Daten mit Cyclic Reduncy Check (CRC) Werten und / oder Pilottöne, die zum Bestimmen der Übertragungsqualität in dem Mobilfunkgerät dienen, enthalten. Wichtig ist dabei, dass die Erfordernisse des Übertragungsstandards eingehalten werden, vor allem die, die es dem Mobilfunkgerät 150 erlauben, die Übertragungsqualität zu bestimmen und den eingestellten Übertragungszustand zu ermitteln. Das Signal wird an eine Sendevorrichtung 106 geschickt, die die Daten entsprechend eines einzustellenden Übertragungszustands auf ein digitales Hochfrequenzsignal moduliert. In Schritt S108 wird festgestellt, ob der Parameterpunkt auch einen Übertragungszustand oder Teile von diesem beschreibt. Ist dies so, wird der Parameterpunkt von dem Parametergenerator 110 an die Sendevorrichtung 106 gegeben, um den Übertragungszustand in Schritt S109b entsprechend einzustellen.

Sowohl in Schritt S109a als auch in Schritt S109b wird der Parameterpunkt von dem Parametergenerator 110 an einen Qualitätssimulator 104 gegeben, der entsprechend dem Parameterpunkt die Übertragungsqualität simuliert. Dabei variiert der Qualitätssimulator 104 in Schritt S109a oder S109b das von der Sendevorrichtung 106 ausgegebene Sendesignal so, dass die durch den Parameterpunkt definierte Qualität erreicht wird. Dies wird z.B. durch Hinzufügen von Rauschen, durch Verzerren oder Dämpfung des Signals oder durch Simulieren von PDPs erreicht. Dabei können auch verschiedene Betriebssituationen simuliert werden. Ein realer Benutzer des Mobiltelefons 150 kann sich z.B. in einem Auto sehr schnell bewegen und so schnelle Qualitätsänderungen des Signals erzeugen oder zu Fuß in einem sehr stationären Umfeld befinden. Das Sendesignal wird mit der simulierten Übertragungsqualität in Schritt S109a oder S109b an das Mobilfunkgerät 150 als zu testendes Gerät gesendet.

Das Mobilfunkgerät 150 empfängt das gesendete Signal in Schritt S110 in einer Empfangsvorrichtung 151. Die Empfangsvorrichtung 151 kennt oder erkennt den eingestellten Übertragungszustand, z.B. Ü₃ oder Ü₄, und demoduliert die übertragenen Daten des Hochfrequenzsignals entsprechend. Durch Pilottöne oder CRC Werte können Übertragungsfehler erkannt werden und eine Größe wie SNR oder BLER, die die Übertragungsqualität beschreibt, berechnet werden. Diese Größe wird oder falls mehrere Übertragungsqualitätsgrößen berücksichtigt werden, werden diese Größen an eine Entscheidungsvorrichtung 152 als Entscheidungsgrundlage geleitet. Berücksichtigt das Mobilfunkgerät 150 auch den aktuell eingestellten Übertragungszustand, so wird dieser ebenfalls an die Entscheidungsvorrichtung als zusätzliche Entscheidungsgrundlage gegeben. In Schritt S111 entscheidet die Entscheidungsvorrichtung 152 auf der Basis der Entscheidungsgrundlage und der im Mobilfunkgerät 150 gespeicherten Entscheidungsregeln 153, ob darauffolgend STC oder SM als Übertragungscodierung verwendet werden soll. Diese Information wird in Schritt S112 als Rückgabewert in einem Antwortsignal über die Sendevorrichtung 154 als Empfehlung an das Testgerät 100 zurückgeschickt. Die Sendevorrichtung 154 moduliert diese Informationen auf ein Antwortsignal wie die Sendevorrichtung 106 die Sendedaten auf das zu sendende Hochfrequenzsignal moduliert. In Schritt S114 demoduliert und digitalisiert die Empfangsvorrichtung 107 im Testgerät 100 die im Antwortsignal übertragenen Rückgabewerte. Diese Rückgabewerte dienen normalerweise der Basisstation als Entscheidungsgrundlage für den tatsächlich darauffolgend einzustellenden Übertragungszustand, z.B. Ü₁-Ü₈. Die im Mobilfunkgerät 150 getroffene Entscheidung zwischen STC und SM dient allerdings nur als Empfehlung für die Basisstation. Ebenfalls in Schritt S114 wird diese mit den Rückgabewerten geschickte Empfehlung in einem Speicher 121 gespeichert. Die Empfehlung wird zusammen mit dem die Empfehlung verursachenden Parameterpunkt gespeichert. Dazu wird der Parameterpunkt von dem Parametergenerator 110 an den Speicher 121 in der Auswertevorrichtung 120 geliefert. Bei der tatsächlichen Entscheidung durch die Basisstation müssen auch weitere Randbedingungen wie verfügbare Kapazität mitberücksichtigt werden.

In Schritt S115 werden nun die Schritte S106 bis S114 wiederholt bis ein Abbruchkriterium diese Schleife unterbricht. D.h. in jeder Wiederholung wird ein neuer zufälliger Parameterpunkt in dem Parametergenerator 110 entsprechend der zuvor definierten Wahrscheinlichkeitsdichte realisiert. Ein Signal wird mittels der Sendevorrichtung 106 entsprechend dem erzeugten Parameterpunkt erzeugt und mit einer simulierten Übertragungsqualität, die durch den erzeugten Parameterpunkt festgelegt ist, an das Mobilfunkgerät 150 gesendet. Das Mobilfunkgerät 150 wählt erneut basierend auf dem neuen Sendesignal eine Empfehlung für die Basisstation aus und sendet diese an das Testgerät 100 zurück. Die Empfehlung wird zusammen mit dem zugehörigen Parameterpunkt zu den bereits in dem Speicher 121 gespeicherten Empfehlungen hinzugefügt und die Schleife beginnt von neuem bis ein Abbruchkriterium erfüllt ist.

Ein Abbruchkriterium kann aus einer maximalen Anzahl von Wiederholungen der Schleife bestehen. Die Anzahl kann z.B. durch den Benutzer festgelegt werden. Die Anzahl der analysierten Parameterpunkte legt am Ende auch die Auflösung der statistischen Auswertung fest. Zu beachten ist, dass ein n-dimensionaler Parameterraum mit Nⁿ Punkten die gleiche Auflösung, d.h. mittlerer Abstand zwischen zwei Punkten im Parameterraum, hat, wie ein eindimensionaler Parameterraum mit N Punkten. Dies muss bei der Wahl der Wiederholungen berücksichtigt werden.

Ein alternatives Abbruchkriterium, wäre es, nach jeder Wiederholung zu testen, ob sich ein Ergebnis noch ändert bzw. sich noch außerhalb eines erlaubten Grenzwertes ändert. Dies erfordert allerdings eine Auswertung dieses Ergebnisses nach jeder Wiederholung oder bzw. z.B. nach jeder 10. Wiederholung. Andererseits bietet dieses Abbruchkriterium ein Optimum zwischen erwünschter Qualität der Ergebnisse und einer kurzen Testzeit, da die Anzahl der Wiederholungen direkt proportional zu der Testzeit ist.

Ist das Abbruchkriterium in Schritt S115 erfüllt, wird in Schritt S116 die statistische Verteilung der Empfehlungen in Abhängigkeit der Parameterpunkte, die Merkmale der Übertragungsqualität und eventuell des Übertragungszustands enthalten, ausgewertet. Dazu werden die gespeicherten Empfehlungen mit deren zugehörigen Parameterpunkten an die statistische Auswertevorrichtung 122 in der Auswertevorrichtung 120 gegeben und dort ausgewertet. Die Ergebnisse werden an die Ausgabevorrichtung 102 gegeben und dort ausgegeben. Dies kann ein Bildschirm sein, der eine graphische Darstellung der Auswertung zeigt oder die Kenngrößen der statistischen Auswertung, wie Lage des Umschaltpunktes und dessen Varianz, wenn es sich um einen eindimensionalen Parameterraum handelt. Alternativ können die Rohdaten bestehend aus Empfehlungen und deren Parameterpunkten auch über eine Schnittstelle an einen externen Computer geschickt werden und dort individuell ausgewertet werden.

Ist die Auswertung des ausgewählten Umschaltpunkts 26 beendet, werden in Schritt S117 die Schritte S104 bis S116 wiederholt, bis alle relevanten Umschaltpunkte untersucht und ausgewertet sind. Es ist möglich, die einzelnen Untersuchungsergebnisse der einzelnen Umschaltbereiche in einer nachgelagerten Auswertung zusammenzufassen.

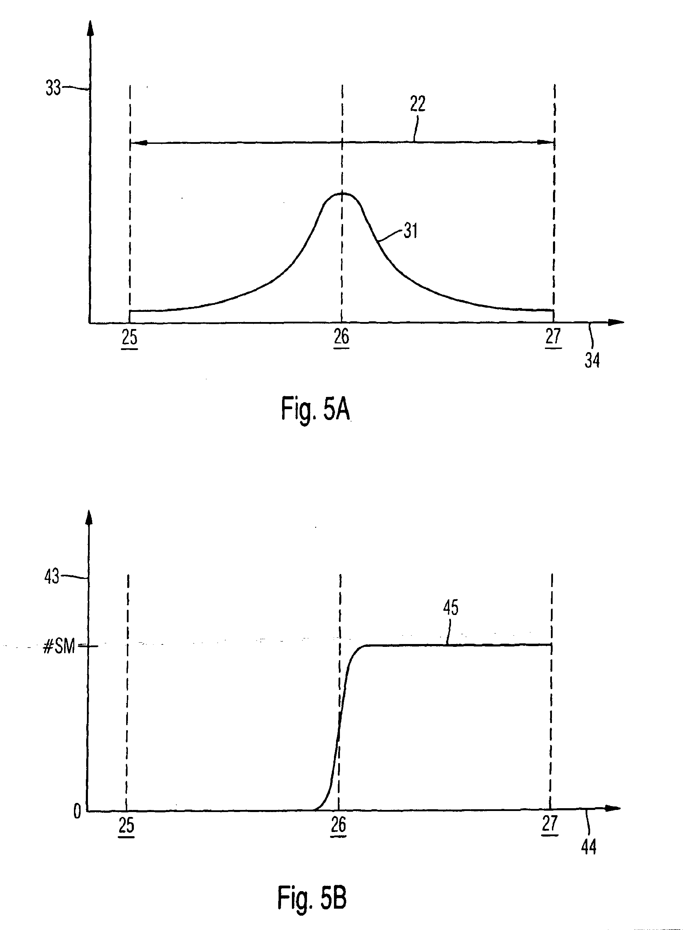

Fig. 5A zeigt die Wahrscheinlichkeitsverteilung, die auf dem Umschaltbereich definiert wurde. Auf der x-Achse 34 ist die Übertragungsqualität als Parameter aufgetragen und auf der y-Achse 33 die Wahrscheinlichkeit diesen Parameterpunkt bzw. diese Übertragungsqualität in dem Parametergenerator 110 zu erzeugen. Der Umschaltbereich 22 ist durch das Intervall von 25 bis 27 festgelegt. Der Parameterpunkt 26 zeigt hier den Umschaltpunkt bzw. den dort vermuteten Umschaltpunkt. Eine Gaußverteilung 31 wird als Standardverteilung des Pseudo Zufallsgenerators 112 vorgeschlagen, die nur innerhalb des Umschaltbereichs 22 definiert ist und den Mittelwert bei dem Umschaltpunkt 26 hat. Die Gaußverteilung sollte das Vorwissen über den Umschaltpunkt 26 widerspiegeln. Ist die Lage sehr genau bekannt, kann die Varianz der Verteilung klein gewählt werden. Ist die Lage des Umschaltpunktes nur bei 26 zu vermuten, sollte eine möglichst große Varianz gewählt werden. Ist nichts über die Lage des Umschaltpunktes 26 bekannt ist auch eine Gleichverteilung denkbar.

Fig. 5B zeigt eine mögliche graphische Darstellung einer statistischen Auswertung des Umschaltbereichs 22 mit der in Fig. 5A definierten Wahrscheinlichkeitsverteilung 31. Die x-Achse 44 stellt hier wie in Fig. 5A die Übertragungsqualität dar und die y-Achse 43 zeigt die kumulative Anzahl der Empfehlungen des Mobilfunkgeräts für SM. Der Punkt #SM ist die Gesamtanzahl der Empfehlungen für SM. Die Kurve 45 bei einer bestimmten Übertragungsqualität zeigt die Anzahl der Entscheidungen für SM in dem Intervall 25 bis zu der bestimmten Übertragungsqualität. In diesem Fall würde das Ergebnis die Lage des Umschaltpunktes 26 bestätigen. Die Steilheit der Flanke im Umschaltpunkt gibt dabei eine Aussage über die Genauigkeit der Lage des Umschaltpunktes.

Eine alternative Verwendung des erfindungsgemäßen Verfahrens liegt im Bereich des Testens der Entscheidungen der einzustellenden Übertragungszuständen in Basisstationen auf der Grundlagen von Rückgabewerten eines Mobiltelefons. Dabei wird ein Mobiltelefon emuliert, eine zu untersuchende Basisstation zu testen.

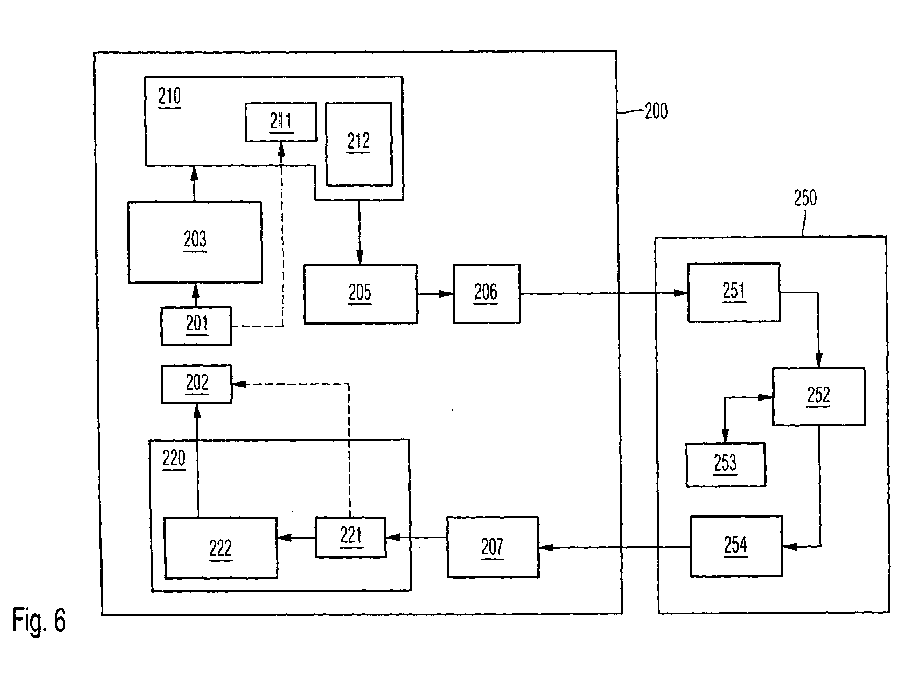

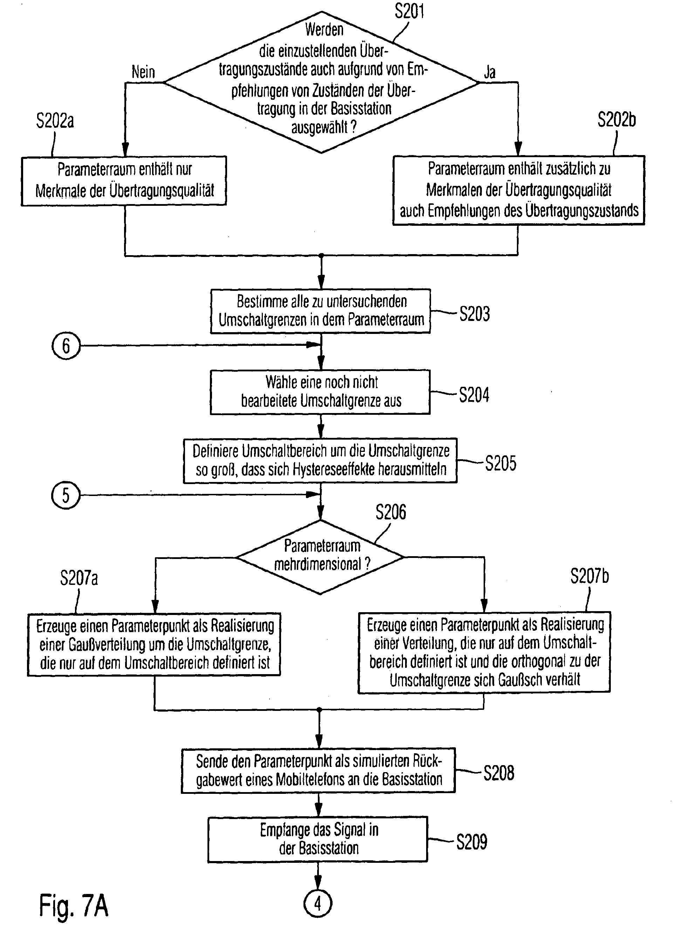

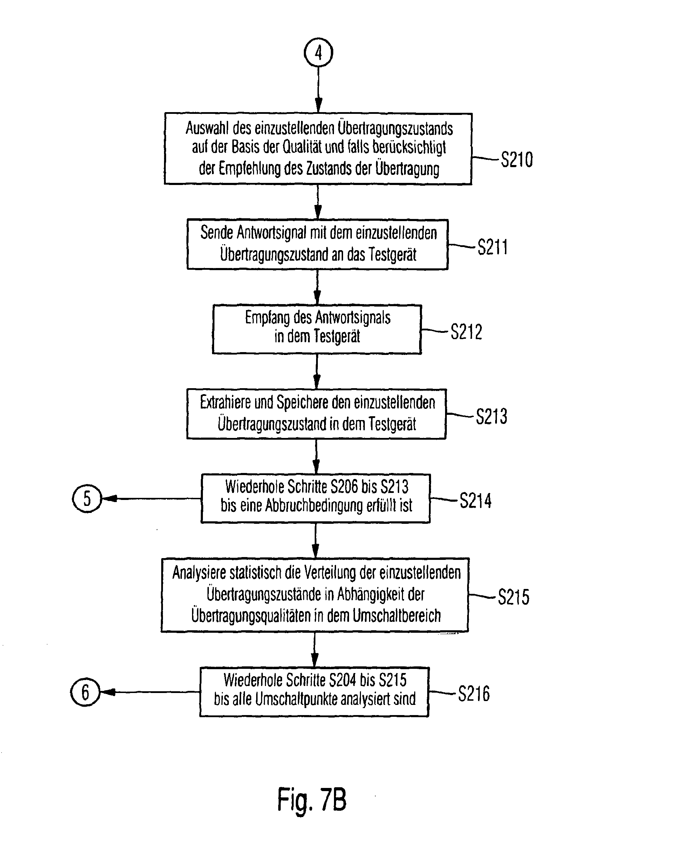

Fig. 6 zeigt ein Schaltdiagramm eines Testgeräts, welches das erfindungsgemäße Verfahren zum Testen von Basisstationen anwendet. Fig. 7A und 7B zeigen die erfindungsgemäßen Verfahrensschritte. Das Verfahren wird anhand von Fig. 6, 7A und 7B im Folgenden beschrieben.

Der Benutzer des Testgeräts 200 kann das Gerät ähnlich dem Testgerät 100 durch eine Eingabevorrichtung 201 und eine Ausgabevorrichtung 202 kontrollieren. Der Benutzer kann in Schritt S201 festlegen, welche Parameter in diesem Testverfahren als Grundlage dienen und statistisch variiert werden. Basiert die Entscheidung der Basisstation 250 auch auf Empfehlungen von Übertragungszuständen, wie z.B. STM oder SM bei WiMAX, die ein Mobilfunkgerät in Form von Rückgabewerten an die Basisstation 250 sendet (S201)? Ist dies nicht der Fall, so wird in Schritt S202a ein Parameterraum definiert, der alle für die Entscheidung relevanten Rückgabewerte beschreibt. Im Normalfall sind dies Größen der Übertragungsqualität, wie sie weiter oben beschrieben wurden. Berücksichtigt die Basisstation 250 auch Empfehlungen von Übertragungszuständen eines Mobilfunkgeräts, so werden die möglichen Empfehlungen zusätzlich in Schritt S202b in den Parameterraum mit aufgenommen. Da die Entscheidungsgrundlage auf den vom Mobilfunkgerät zurückgesendeten Rückgabewerten basiert, ist die Entscheidungsgrundlage durch den Übertragungsstandard limitiert. Dementsprechend könnte die Auswahl des richtigen Parameterraums auch durch die Auswahl des richtigen Übertragungsstandards anstatt der einzelnen Parameter vereinfacht werden.

Wie auch schon für das Testgerät 100 ausgeführt, werden in Schritt S203 vorzugsweise alle zu untersuchenden Umschaltgrenzen bestimmt. In Schritt S204 wird eine noch nicht untersuchte Umschaltgrenze, z.B. 26, ausgewählt und zusammen mit dem definierten Parameterraum an die Definitionsvorrichtung 203 gegeben. In dem Schritt S205 wird in der Definitionsvorrichtung 203, wie schon in Schritt S105 beschrieben, ein Umschaltbereich, z.B. 22, definiert, der den Umschaltpunkt oder die Umschaltgrenze enthält. Im Weiteren wird ohne Beschränkung der Erfindung der Umschaltbereich 22 des Umschaltpunkts 26 untersucht.

Der definierte Umschaltbereich 22 wird an den Parametergenerator 210 übergeben, der in dem Pseudo Zufallszahlengenerator 212 zufällige Parameterpunkte aus dem Umschaltbereich 22 erzeugt. Dazu werden analog zu den Schritten S106, S107a, S107b in den Schritten S206, S207a, S207b eine Wahrscheinlichkeitsdichte auf dem Umschaltbereich 22 definiert, die oder deren Konstruktionsregeln in dem Speicher 211 gespeichert sind.

Der zufällig erzeugte Parameterpunkt entspricht einem der möglichen Rückgabewerte bzw. einem möglichen Satz von Rückgabewerten eines Mobiltelefons. Die Rückgabewerte werden gewöhnlich an bestimmte Stellen in den Übertragungsblöcken geschrieben, die durch den Übertragungsstandard und den Übertragungszustand festgelegt sind. Daten werden unter Berücksichtigung des Übertragungsstandards und des Übertragungszustands mit dem Rückgabewert oder den Rückgabewerten in dem Datenerzeuger 205 erzeugt. Diese Daten werden mittels einer Sendevorrichtung 206 auf ein Hochfrequenzsignal digital moduliert und in Schritt S208 an die Basisstation 250 als zu testendes Gerät gesendet. In Schritt S209 wird das gesendete Signal mit den Rückgabewerten in der Empfangsvorrichtung 251 der Basisstation 250 empfangen und die Rückgabewerte aus dem Sendesignal extrahiert.

Die in dem Testgerät 200 zufällig erzeugten Rückgabewerte, die die Rückgabewerte eines Mobiltelefons simulieren und den Parameterpunkte entsprechen, werden in der Basisstation 250 an eine Entscheidungsvorrichtung 252 gegeben. In Schritt S210 wird in der Entscheidungsvorrichtung 252 auf der Basis der Rückgabewerte und der Entscheidungsregeln 253 der Basisstation eine Entscheidung bezüglich eines einzustellenden Übertragungszustands getroffen.

In Schritt S211 wird mittels der Sendevorrichtung 254 ein Antwortsignal, das den einzustellenden Übertragungszustand enthält, an das Testgerät 200 zurückgeschickt. Dieses Antwortsignal ist im Normalbetrieb der Basisstation 250 an ein Mobilfunkgerät gerichtet, damit dieses den darauffolgend einzustellenden Übertragungszustand verstehen kann.

In Schritt S212 wird das Antwortsignal in der Empfangsvorrichtung 207 des Testgeräts 200 empfangen und der darin enthaltene einzustellende Übertragungszustand extrahiert. Dieser extrahierte Übertragungszustand wird an die Auswertevorrichtung 220 übergeben, wo er in einem Speicher 221 zusammen mit dem erzeugten Parameterpunkt gespeichert wird. Der Parameterpunkt, der die Entscheidung des einzustellenden Übertragungszustands verursachte, wird deshalb von dem Parametergenerator 210 an den Speicher 211 der Auswertevorrichtung 210 übergeben.

In Schritt S214 werden die Schritte S206 bis S213 wiederholt bis eine Abbruchbedingung erfüllt ist. Die Abbruchbedingung kann wie oben beschrieben aussehen. In jeder dieser Wiederholungen bzw. dieser Schleifendurchläufe wird ein neuer zufälliger Parameterpunkt aus dem Umschaltbereich 22 erzeugt und die oben beschriebenen Schritte für jeden neuen Parameterpunkt wiederholt.

Ist schließlich die Abbruchbedingung erfüllt, so werden im Schritt S215 alle einzustellenden Übertragungszustände in Abhängigkeit der Parameterpunkte des Umschaltbereichs 22 statistisch analysiert. Dazu werden alle gespeicherten einzustellenden Übertragungszustände und deren zugehörige Parameterpunkte von dem Speicher 221 in die statistische Auswertevorrichtung 222 gegeben und möglicherweise wie oben beschrieben ausgewertet.

In Schritt S216 werden für jeden zu untersuchenden Umschaltpunkt die Schritte S206 bis S213 ausgeführt bis alle zu untersuchenden Umschaltpunkte ausgewertet sind.

Die Erfindung ist nicht auf die dargestellten Ausführungsbeispiele beschränkt. Vielmehr sind einzelne Merkmale auch vorteilhaft miteinander kombinierbar.

## Patentansprüche

1. Verfahren zum Testen eines Mobilfunkgeräts zur drahtlosen Kommunikation in einem Funknetz bestehend aus den folgenden Schritten:
Festlegen eines Umschaltbereichs in einem Parameterraum (S105), der mindestens einen Parameter enthält, der eine Qualität einer Übertragung beschreibt und eine Empfehlung eines einzustellenden Übertragungszustands beeinflusst, wobei der Umschaltbereich mindestens eine Umschaltgrenze (26) für die Empfehlung des einzustellenden Übertragungszustands enthält;
Festlegen einer Anzahl zufälliger Parameterpunkte in dem Umschaltbereich (S107a, S107b) in einem Testgerät (100) durch Realisierung einer auf dem Umschaltbereich definierten Wahrscheinlichkeitsverteilung (31);
Übertragen je eines Signals pro zufällig festgelegten Parameterpunkt mit einer durch den Parameterpunkt festgelegten simulierten Übertragungsqualität (S109a) an ein zu testendes Gerät (150);
Zurücksenden je eines Antwortsignals durch das zu testende Gerät (150) pro empfangenem Signal (S112), das eine Empfehlung für einen darauffolgenden Übertragungszustand enthält, an das Testgerät (100); und
Auswerten zurückgesendeter Empfehlungen einzustellender Übertragungszustände aus von dem Testgerät (100) empfangenen Antwortsignalen (S116).

2. Verfahren zum Testen einer Basisstation zur drahtlosen Kommunikation in einem Funknetz bestehend aus den folgenden Schritten:
Festlegen eines Umschaltbereichs in einem Parameterraum (S205), der mindestens einen Parameter enthält, der eine Qualität einer Übertragung beschreibt und einen einzustellenden Übertragungszustand beeinflusst, wobei der Umschaltbereich mindestens eine Umschaltgrenze (26) für den einzustellenden Übertragungszustand enthält;
Festlegen einer Anzahl zufälliger Parameterpunkte in dem Umschaltbereich (S207a, S207b) in einem Testgerät (200) durch Realisierung einer auf dem Umschaltbereich definierten Wahrscheinlichkeitsverteilung (31);
Übertragen eines jeden Parameterpunktes in je einem Signal an ein zu testendes Gerät (250) (S208);
Zurücksenden je eines Antwortsignals pro empfangenem Signal (S211), das den einzustellenden Übertragungszustand enthält, an das Testgerät (200); und
Auswerten von einzustellenden Übertragungszuständen aus von dem Testgerät (200) empfangenen Antwortsignalen (S215).

3. Verfahren nach Anspruch 1 oder 2,
**dadurch gekennzeichnet,**
**dass** zusätzliche Umschaltbereiche festgelegt werden (S103, S203) und entsprechend Anspruch 1 oder 2 ausgewertet werden.

4. Verfahren nach Ansprüchen 1 bis 3,
**dadurch gekennzeichnet,**
**dass** eine Umschaltgrenze (26), die sich in einem n-dimensionalen Umschaltbereich (22) befindet, einen (n-1)-dimensionalen Unterraum des Umschaltbereichs (22) bildet.

5. Verfahren nach Ansprüchen 1 bis 4,
**dadurch gekennzeichnet,**
**dass** die auf dem Umschaltbereich (22) definierte Wahrscheinlichkeitsverteilung (31) im eindimensionalen Parameterraum eine Gaußverteilung ist (S107a) und im mehrdimensionalen Parameterraum die auf dem Umschaltbereich (22) definierte Wahrscheinlichkeitsverteilung (31) in der zu der Umschaltgrenze (26) orthogonale Richtung einer Gaußverteilung gehorcht und deren transienten Richtungen einer Gleichverteilung (S107b).

6. Verfahren nach Ansprüchen 1 bis 5,
**dadurch gekennzeichnet,**
**dass** die durch das Antwortsignal übertragenen einzustellenden Übertragungszustände oder deren Empfehlungen statistisch ausgewertet werden (S116, S215).

7. Verfahren nach Anspruch 6,
**dadurch gekennzeichnet,**
**dass** die Auflösung der statistischen Auswertung durch die Anzahl der Parameterpunkte bestimmt wird.

8. Verfahren nach Ansprüchen 1 bis 7,
**dadurch gekennzeichnet,**
**dass** die Anzahl der Parameterpunkte durch eine Anzahl von Schleifendurchläufen bis zum Erreichen eines Abbruchkriteriums bestimmt wird, wobei in einem Schleifendurchlauf jeweils ein Parameterpunkt erzeugt wird.

9. Verfahren nach Ansprüchen 1 bis 8,
**dadurch gekennzeichnet,**
**dass** Intervallgrenzen der Umschaltbereiche (22) so gewählt werden, dass Hystereseschwellen der mindestens einen Umschaltgrenze im Umschaltbereich (22) umfasst sind und Hystereseffekte und Richtungsabhängigkeiten bei mehrdimensionalen Parametern in den Umschaltungen zwischen zwei Übertragungszuständen bei statistischer Auswertung der zurückgesendeten Empfehlungen für Übertragungszustände ausgemittelt werden (S105, S205).

10. Verfahren nach Anspruch 1,
**dadurch gekennzeichnet,**
**dass** ein Mobilfunkgerät (150) getestet wird und der verwendete Übertragungsstandard dem des WiMAX Forum entspricht und in dem Mobilfunkgerät eine Empfehlung zur Einstellung von Space Time Coding oder Spatial Multiplexing an die Basisstation gegeben wird.

11. Verfahren nach Anspruch 1,
**dadurch gekennzeichnet,**
**dass** der Parameterraum zusätzlich zu der Qualität der Übertragung einen Übertragungszustand beschreibt und die einzelnen Signale an das zu testende Gerät (150) in dem Übertragungszustand übertragen werden, der durch den entsprechenden zufällig erzeugten Parameterpunkt definiert wurde und bei der Auswahl einer Empfehlung eines einzustellenden Übertragungszustands in dem zu testenden Gerät (150) auch der in dem übertragenen Signal eingestellte Übertragungszustand berücksichtigt wird.

12. Verfahren nach Anspruch 2,
**dadurch gekennzeichnet,**
**dass** der Parameterraum zusätzlich zu der Qualität der Übertragung eine Empfehlung eines Übertragungszustands enthält.

13. Verfahren nach Anspruch 2 oder 12,
**dadurch gekennzeichnet,**
**dass** das Verfahren eine Basisstation (250) testet.

14. Verfahren nach Anspruch 13,
**dadurch gekennzeichnet,**
**dass** die Parameterwerte mögliche Rückgabewerte eines Mobilfunkgeräts an eine Basisstation (250) sind.

## Claims

1. Method for testing a mobile radio for wireless communication in a radio network comprising the following steps:
a changeover range in a parameter space that contains at least one parameter that describes a quality of a transmission and influences a recommendation for a transmission state that is to be set is stipulated (S105), wherein the changeover range contains at least one changeover boundary (26) for the recommendation for the transmission state that is to be set;
a number of random parameter points in the changeover range are stipulated (S107a, S107b) in a tester (100) by implementing a probability distribution (31) that is defined on the changeover range;
one signal per randomly stipulated parameter point is transmitted to a device (150) to be tested with a simulated transmission quality that is stipulated by the parameter point (S109a);
one response signal per received signal that contains a recommendation for a subsequent transmission state is returned to the tester (100) by the device (150) to be tested (S112); and
returned recommendations for transmission states that are to be set are evaluated from response signals that are received by the tester (100) (S116).

2. Method for testing a base station for wireless communication in a radio network comprising the following steps:
a changeover range in a parameter space that contains at least one parameter that describes a quality of a transmission and influences a transmission state that is to be set is stipulated (S205), wherein the changeover range contains at least one changeover boundary (26) for the transmission state that is to be set;
a number of random parameter points in the changeover range are stipulated (S207a, S207b) in a tester (200) by implementing a probability distribution (31) that is defined on the changeover range;
each parameter point in every one signal is transmitted to a device (250) to be tested (S208);
one response signal per received signal that contains the transmission state that is to be set is returned to the tester (200) (S211); and
transmission states that are to be set are evaluated from response signals that are received by the tester (200) (S215).

3. Method according to Claim 1 or 2,
**characterized**
**in that** additional changeover ranges are stipulated (S103, S203) and are evaluated in accordance with Claim 1 or 2.

4. Method according to Claims 1 to 3,
**characterized**
**in that** a changeover boundary (26) that is situated in an n-dimensional changeover range (22) forms an (n-1)-dimensional subspace for the changeover range (22).

5. Method according to Claims 1 to 4,
**characterized**
**in that** the probability distribution (31) that is defined on the changeover range (22) is a Gaussian distribution in the one-dimensional parameter space (S107a) and, in the multidimensional parameter space, the probability distribution (31) that is defined on the changeover range (22) complies with a Gaussian distribution in the direction orthogonal to the changeover boundary (26) and with an even distribution in the transient directions thereof (S107b).

6. Method according to Claims 1 to 5,
**characterized**
**in that** the transmission states to be set, or the recommendations therefor, that are transmitted by the response signal are evaluated statistically (S116, S215).

7. Method according to Claim 6,
**characterized**
**in that** the resolution of the statistical evaluation is determined by the number of parameter points.

8. Method according to Claims 1 to 7,
**characterized**
**in that** the number of parameter points is determined by a number of loop passes until a termination criterion is reached, wherein one parameter point is produced in each loop pass.

9. Method according to Claims 1 to 8,
**characterized**
**in that** interval boundaries for the changeover ranges (22) are chosen such that hysteresis thresholds for the at least one changeover boundary are included in the changeover range (22) and hysteresis effects and direction dependencies for multidimensional parameters in the changeover operations between two transmission states are averaged out upon statistical evaluation of the returned recommendations for transmission states (S105, S205).

10. Method according to Claim 1,
**characterized**
**in that** a mobile radio (150) is tested and the transmission standard used corresponds to that of the WiMAX forum and the mobile radio provides the base station with a recommendation for setting space time coding or spatial multiplexing.

11. Method according to Claim 1,
**characterized**
**in that** the parameter space describes a transmission state in addition to the quality of transmission and the individual signals are transmitted to the device (150) to be tested in the transmission state that has been defined by the relevant randomly produced parameter point, and the selection of a recommendation for a transmission state that is to be set involves the transmission state that is set in the transmitted signal also being taken into account in the device (150) to be tested.

12. Method according to Claim 2,
**characterized**
**in that** the parameter space contains a recommendation for a transmission state in addition to the quality of the transmission.

13. Method according to Claim 2 or 12,
**characterized**
**in that** the method tests a base station (250).

14. Method according to Claim 13,
**characterized**
**in that** the parameter values are possible return values for a mobile radio to a base station (250).

## Revendications

1. Procédé pour tester un appareil radio mobile en vue d'une communication sans fil dans un réseau constitué des étapes suivantes :
la détermination d'une zone de transition dans un espace de paramètre (S105), qui contient au moins un paramètre, qui décrit une qualité de transmission et influence une recommandation d'un état de transmission à déterminer, dans lequel la zone de transition contient au moins une limite de transition (26) pour la recommandation de l'état de transmission à déterminer;
la détermination d'un nombre de points de paramètre aléatoires dans la zone de transition (S107a, S107b) dans un appareil de test (100) grâce à la réalisation d'une loi de probabilité définie dans la zone de transition (31) ;
la transmission de chaque signal par point de paramètre déterminé de façon aléatoire avec une qualité de transmission simulée déterminée par le point de paramètre (S109a) à un appareil à tester (150) ;
le renvoi de chaque signal de réponse par l'appareil à tester (150) par signal reçu (S112), qui contient une recommandation pour un état de transmission suivant, à l'appareil de test (100) ; et
une évaluation des recommandations renvoyées des états de transmission à déterminer à partir des signaux de réponse (S116) reçus par l'appareil de test (100).

2. Procédé de test d'une station de base en vue d'une communication sans fil dans un réseau constitué des étapes suivantes :
la détermination d'une zone de transition dans un espace de paramètre (S205), qui contient au moins un paramètre, qui décrit une qualité d'une transmission et influence un état de transmission à déterminer, dans laquelle la zone de transition contient au moins une limite de transition (26) pour l'état de transmission à déterminer;
la détermination d'un nombre de points de paramètre aléatoires dans la zone de transition (S207a, S207b) dans un appareil de test (200) grâce à la réalisation d'une loi de probabilité définie sur la zone de transition (31) ;
la transmission de chaque point de paramètre dans un signal à un appareil à tester (250) (S208) ;
le renvoi de chaque signal de réponse par signal reçu (S211), qui contient l'état de transmission à déterminer, à l'appareil de test (200) ; et
l'évaluation des états de transmission à déterminer à partir des signaux de réponse reçus par l'appareil de test (200) (S215).

3. Procédé selon la revendication 1 ou 2, **caractérisé en ce que**
des zones de transition supplémentaires sont déterminées (S103, S203) et sont évaluées conformément à la revendication 1 ou 2.

4. Procédé selon les revendications 1 à 3, **caractérisé en ce que**
une limite de transition (26), qui se trouve dans une zone de transition de dimension n (22), forme un sous- espace de dimension (n-1) de la zone de transition (22).

5. Procédé selon les revendications 1 à 4, **caractérisé en ce que**
la loi de probabilité (31) définie sur la zone de transition (22) dans l'espace de paramètre unidimensionnel est une loi de Gauss (S107a) et dans un espace de paramètre pluridimensionnel, la loi de probabilité (31) dans la direction orthogonale par rapport à la limite de transition (26) définie sur la zone de transition (22) obéit à une loi de Gauss et ses directions transitoires à une loi uniforme (S107b).

6. Procédé selon les revendications 1 à 5, **caractérisé en ce que**
les états de transmission à déterminer transmis par le signal de réponse ou leurs recommandations sont évalués de façon statistique (S116, S215).

7. Procédé selon la revendication 6, **caractérisé en ce que**
la résolution de l'évaluation statistique est déterminée par le nombre de points de paramètre.

8. Procédé selon les revendications 1 à 7, **caractérisé en ce que** le nombre des points de paramètre est déterminé par un nombre de boucles jusqu'à l'obtention d'un critère d'interruption, dans lequel un point de paramètre est respectivement généré dans une boucle.

9. Procédé selon les revendications 1 à 8, **caractérisé en ce que**
les limites d'intervalle des zones de transition (22) sont sélectionnées de sorte que les seuils d'hystérésis de la au moins une limite de transition soient compris dans la zone de transition (22) et les effets d'hystérésis et les dépendances directionnelles sont calculés dans le cas de paramètres pluridimensionnels dans des transitions entre les deux états de transmission lors de l'évaluation statistique des recommandations renvoyées pour les états de transmission (S105, S205).

10. Procédé selon la revendication 1, **caractérisé en ce que**
un appareil radio mobile (150) est testé et le standard de transmission utilisé correspond à celui du WiMAX forum et dans l'appareil radio mobile, une recommandation pour la détermination du codage temporel spatial ou du multiplexage spatial est donnée à la station de base.

11. Procédé selon la revendication 1, **caractérisé en ce que**
l'espace de paramètre décrit, en plus de la qualité de la transmission, un état de transmission et les signaux individuels sont transmis à l'appareil à tester (150) dans l'état de transmission, qui est défini par le point de paramètre correspondant généré de façon aléatoire et lors de la sélection d'une recommandation d'un état de transmission à déterminer dans l'appareil à tester (150), l'état de transmission déterminé dans le signal transmis est pris en considération.

12. Procédé selon la revendication 2, **caractérisé en ce que**
l'espace de paramètre contient une recommandation d'un état de transmission en plus de la qualité de transmission.

13. Procédé selon la revendication 2 ou 12, **caractérisé en ce que**
le procédé teste une station de base (250).

14. Procédé selon la revendication 13, **caractérisé en ce que** les valeurs de paramètre sont des valeurs de renvoi possible d'un appareil radio mobile à une station de base (250).
